# EUROPÄISCHE PATENTANMELDUNG

(11) **EP 0 872 434 A1**
(43) Veröffentlichungstag der Anmeldung: **21.10.1998**
(21) Anmeldenummer: 98105429.9
(22) Anmeldetag: 25.03.1998
(51) Int. Cl.: B65G 15/58, B28C 5/40

(54) **Magnetförderer**

(30) Priorität: 18.04.1997 DE 29707008 U
(71) Anmelder: Liebherr-Mischtechnik GmbH, 88423 Bad Schussenried (DE)
(72) Erfinder: Baumeister, Kurt, Dipl.-Ing., 88422 Bad Buchau (DE); Kletsch, Reinhold, Dipl.-Ing., 88422 Bad Buchau (DE)
(74) Vertreter: Gossel, Hans K., Dipl.-Ing.

(57) **Zusammenfassung**

Zur Zuführung von Stahlfasern oder Stahlspänen in dosierter Form zu dem Mischbehälter eines Betonmischers wird ein Magnetförderer verwendet, der aus einem in einem Gestell (1) gehalterten Förderbahn (6) aus flachen, bandförmigen und magnetisch durchlässigem Material, unter der das Obertrum eines über Umlenk- und Leitrollen geführten, endlosen, flexiblen und mit einem Antrieb versehenen Zugmittel (4) verläuft, in dem Permanent- oder Elektromagnete (5) gehaltert sind, und aus einer oberhalb der Aufgabeseite der Förderbahn (6) angeordneten bodenfreien Behälter (7) oder Aufgabetrichter besteht.

## Beschreibung

Die Erfindung betrifft einen Magnetförderer mit einer in einem Gestell gehalterten Förderbahn aus flachem, bandförmigem und magnetisch durchlässigem Material, unter der das Obertrum eines über Umlenk- und Leitrollen geführten, endlosen, flexiblen, mit einem Antrieb versehenen Zugmittel verläuft, in dem Permanent- oder Elektromagnete gehaltert sind, und mit einem oberhalb der Aufgabeseite der Förderbahn angeordneten bodenfreien Behälter oder Aufgabetrichter.

Magnetförderer dieser Art sind grundsätzlich bekannt und dienen der Abförderung und Entsorgung der bei der spanabhebenden Bearbeitung von Werkstücken in Werkzeugmaschinen anfallenden Stahlspäne.

Ein aus FR 2561217 bekannter Magnetförderer dient der Förderung von magnetischen Gütern von einem Aufnahmetrichter zu einem Trog oder einem weiterfördernden Fördermittel.

Zur Erhöhung der Zugfestigkeit von Beton ist es bekannt, diesem Stahlfasern zuzusetzen, die sich aufgrund ihrer Form und Länge mit dem Beton verklammern. Es ist bekannt, diese die Zugfestigkeit erhöhenden Stahlfasern dem den Beton mischenden Mischer entweder manuell oder durch eine Fördereinrichtung zuzugeben, die aus einer Fördereinrichtung, beispielsweise einem Förderband, oder aber aus einem Gebläse oder einem Vibrationsförderer besteht.

Die manuelle Zugabe von Stahlfasern ist aufwendig und ungenau.

Bei der Verwendung von Förderern, beispielsweise Bandförderern, besteht das Problem der gleichmäßigen Aufgabe der Stahlfasern, da vermieden werden muß, daß diese unter Bildung von Klumpen in den Mischer gelangen.

Die Verwendung von Förder-Gebläsen ist ebenfalls problematisch, da durch abprallende Stahlfasern eine Verletzungsgefahr besteht und nicht sämtliche Arten von Stahlfasern geeignet sind, durch Gebläse gefördert zu werden.

Vibrationsförderer bedingen einen erheblichen Investitionsaufwand und sind darüberhinaus nicht geeignet, die zuzusetzenden, Stahlfasern aufsteigend zu fördern.

Aufgabe der Erfindung ist es daher, eine mit verhältnismäßig geringem Aufwand herstellbare Fördereinrichtung vorzuschlagen, mit der sich sämtlichen üblichen Mischern Stahlfasern in dosierter Form zusetzen lassen.

Diese Aufgabe wird durch die Verwendung eines Magnetförderers der eingangs angegebenen Art zur Zuführung von Stahlfasern oder -spänen in dosierter Form zu dem Mischbehälter eines Betonmischers gelöst.

Die Erfindung besteht somit in der Verwendung eines an sich bekannten Magnetförderers als Fördereinrichtung zur Zugabe von Stahlfasern in Beton-Mischeinrichtungen. Der bodenfreie Behälter des Magnetförderers ist im Bereich der Aufgabeseite des Magnetförderers angeordnet, also an dem Ende der Förderbahn, an dem das mit Magneten versehene Zugmittel unter die Förderbahn einläuft.

Das Abwurfende der Förderbahn wird oberhalb der Einfüllöffnung für die Stahlfasern in den Mischbehälter angeordnet.

Die ortsfest im Gestell gehalterte Förderbahn kann aus Kunststoffmaterial ausreichender Steifigkeit und Abriebfestigkeit oder aber auch aus Metall, beispielsweise Aluminium, mit geringer Permeabilität bestehen, so daß die notwendige magnetische Durchlässigkeit gegeben ist.

In weiterer Ausgestaltung der Erfindung ist vorgesehen, daß der Magnetförderer mit Behälter auf einer Waage abgestützt ist. Diese Ausgestaltung gestattet es, den Behälter mit den dem Beton zuzumischenden Stahlfasern zu füllen und den Magnetförderer dann zu stoppen, wenn die Waage eine Gewichtsabnahme anzeigt, die der der Betonmischung zuzusetzenden Menge an Stahlfasern entspricht. Die erfindungsgemäß vorgesehene Waage ist also eine sogenannte Negativwaage, die dekrementierend arbeitet.

Zweckmäßigerweise ist vor der Abwurfseite der Förderbahn ein sich über deren Breite erstreckender Abstreifer im Gestell angeordnet. Mit diesem Abstreifer läßt sich die Schichthöhe der der Mischung zuzusetzenden Stahlfasern einstellen. Darüberhinaus führt dieser Abstreifer auch zu einer Vergleichmäßigung des Stroms der zuzusetzenden Stahlfasern.

Zweckmäßigerweise ist die Geschwindigkeit des Zugmittels und/oder die Magnetkraft einstellbar. Auf diese Weise läßt sich die gewünschte Dosierung erreichen.

Um eine bequeme Zugabe der Stahlfasern zu dem Mischer zu ermöglichen, kann die Förderbahn eine von dem Behälter zur Abwurfseite hin ansteigende Strecke aufweisen.

Die Förderbahn kann eine L- oder Z-förmige Gestalt in der Weise aufweisen, daß deren etwa horizontalen Abschnitte stumpfe Winkel mit dem schräg verlaufenden Abschnitt einschließen.

Nach einer bevorzugten Ausführungsform der Erfindung ist vorgesehen, daß das Gestell des Magnetförderers verfahrbar ist. Hierzu kann das Gestell selbst mit Rädern versehen oder aber ein Fahrgestell vorgesehen sein, auf das das Gestell des Magnetförderers unmittelbar oder über Wägeeinrichtung abgestützt ist.

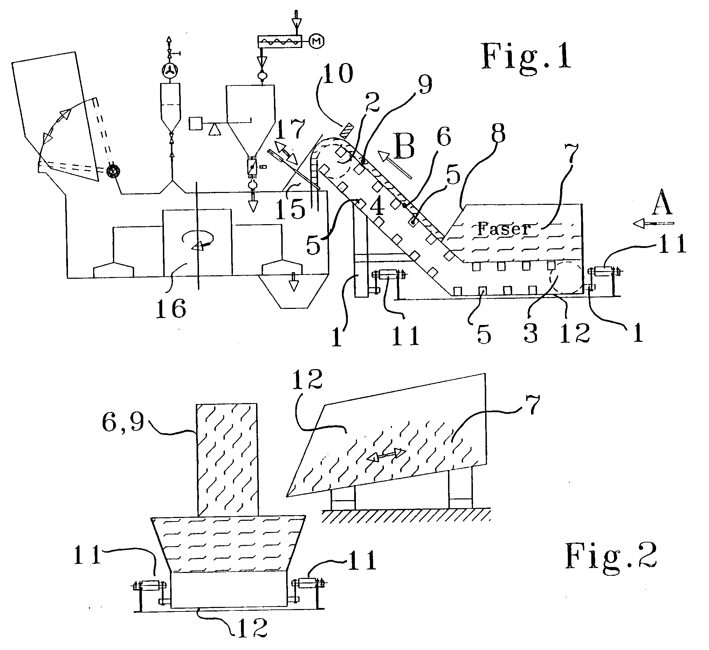

Ein Ausführungsbeispiel der Erfindung wird nachstehend anhand der Zeichnung näher erläutert. In dieser zeigt
- Fig. 1: eine Seitenansicht des erfindungsgemäßen Magnetförderers in schematischer Seitenansicht und
- Fig. 2: eine Ansicht des Magnetförderers in Richtung des Pfeils A in Fig. 1 mit Zugabe der Fasern über einen Vorratsbehälter.

In einem schematisch dargestellten Gestell 1 sind Umlenkrollen 2, 3, von denen eine mit einem Antrieb versehen ist, und nicht dargestellte weitere Umlenk- und Leitrollen gelagert, über die ein endloser flexibler Gurt oder Riemen 4 läuft, in die schematisch angedeutete Magnete 5, bei denen es sich um Permanent- oder Elektromagnete handeln kann, eingebettet sind. Handelt es sich bei den in geeigneten Abständen angeordneten Magneten 5 um Elektromagnete, sind zu deren Stromversorgung übliche und nicht dargestellte Schleifkontakte vorgesehen.

Oberhalb des Obertrums des endlosen Riemens oder Gurts, bei denen es sich auch um eine Schar von Gurten oder Riemen handeln kann, ist in dem Gestell 1 eine das Obertrum abdeckende Förderbahn aus magnetisch durchlässigem Blech oder Kunststoff ausreichender Steifigkeit gehaltert. Diese Förderbahn erstreckt sich etwa von der unteren Umlenkrolle 3 bis über den Abwurfbereich der oberen Umlenkrolle 2 hinaus, so daß auf der Förderbahn die der Betonmischung zuzusetzenden Stahlfasern im gleichmäßigen Strom reibend gefördert werden.

Die Förderbahn weist eine L-förmige Form mit gegenüber dem horizontalen Abschnitt nach links geneigten ansteigenden Abschnitt auf. Oberhalb des horizontalen Abschnitts der Förderbahn 6 ist ein trichterförmiger Behälter 7 in dem Gestell 1 gehaltert, dessen Bodenseite durch die Förderbahn geschlossen ist. Die vordere Wand 8 des Behälters 7 bildet mit der Förderbahn 6 einen schmalen Austrittsspalt, durch den die mit dem endlosen Zugmittel 4 umlaufenden Magnete die Stahlfaser abziehen, so daß diese in einem Strom 9 mit etwa gleicher Schüttdichte in Richtung des Pfeils B gefördert werden können. Im Bereich der oberen Umlenkrolle 2 ist in dem Gestell ein einstellbarer Abstreifer 10 gehaltert, mit dem sich die gewünschte Schütthöhe des Stahlfaserstroms einstellen läßt.

Das Gestell 1 ist über Wägezellen 11 auf einer Grundplatte 12 abgestützt, so daß sich das Gewicht des Gestells mit Magnetförderer und Behälter 7 sowie der den Behälter 7 aufgegebenen Stahlfasertüllung ständig erfassen läßt.

In den Behälter 7 können die Stahlfasern, die beispielsweise in 20-kg-Paketen angeliefert werden, aufgegeben werden.

Eine Aufgabe der zuzumischenden Stahlfasern in den Behälter 7 kann auch durch einen besonderen Vorratsbehälter 12 bei stationären Anlagen erfolgen, der mit einem den Austrag bewirkenden Vibrator versehen sein kann. In den Vorratsbehälter 12 können dann die zuzumischenden Stahlfasern in größeren Gebinden aufgegeben werden.

Die Abwurfseite des Magnetförderers wird in der dargestellten Weise oberhalb der Zuführungsöffnung 15 eines Mischers, im dargestellten Ausführungsbeispiel eines Ringtrogmischers 16, angeordnet. Die Einfüllöffnung 15 ist durch einen mit einem Antrieb versehenen Schieber 17 verschließbar.

Dem Mischer 16 werden in üblicher Weise durch Einfüllöffnungen Zement und Zuschläge sowie Wasser zugeführt.

Zur Vermeidung von Staubbildung ist weiterhin eine Absaugeinrichtung mit vorgeschaltetem Filter vorgesehen.

## Patentansprüche

1. Verwendung eines Magnetförderers
mit einer in einem Gestell (1) gehalterten Förderbahn (6) aus flachem, bandförmigem und magnetisch durchlässigem Material, unter der das Obertrum eines über Umlenk- und Leitrollen geführten, endlosen, flexiblen, mit einem Antrieb versehenen Zugmittel (4) verläuft, in dem Permanent- oder Elektromagnete (5) gehaltert sind, und
mit einem oberhalb der Aufgabeseite der Förderbahn (6) angeordneten bodenfreien Behälter (7) oder Aufgabetrichter
zur Zuführung von Stahlfasern oder -spänen in dosierter Form zu dem Mischbehälter eines Betonmischers (16)

2. Verwendung eines Magnetförderers nach Anspruch 1, dadurch gekennzeichnet, daß dieser zusammen mit dem Behälter auf einer Waage (11) abgestützt ist.

3. Verwendung eines Magnetförderers nach Anspruch 1 oder 2, dadurch gekennzeichnet, daß vor der Abwurfseite der Förderbahn ein sich über deren Breite erstreckender Abstreifer (10) angeordnet ist.

4. Verwendung eines Magnetförderers nach einem der Ansprüche 1 bis 3, dadurch gekennzeichnet, daß die Geschwindigkeit des Zugmittels (4) und/oder die Magnetkraft einstellbar sind.

5. Verwendung eines Magnetförderers nach einem der Ansprüche 1 bis 4, dadurch gekennzeichnet, daß die Förderbahn (6) einen von dem Behälter (7) zur Abwurfseite hin ansteigende Strecke aufweist.

6. Verwendung eines Magnetförderers nach einem der Ansprüche 1 bis 5, dadurch gekennzeichnet, daß die Förderbahn eine L- oder Z-förmige Gestalt in der Weise aufweist, daß deren etwa horizontalen Abschnitte stumpfe Winkel mit dem schräg verlaufenden Abschnitt einschließen.

7. Verwendung eines Magnetförderers nach einem der Ansprüche 1 bis 6, dadurch gekennzeichnet, daß das Gestell des Magnetförderers verfahrbar ist.
